# FASCICULE DE BREVET EUROPEEN

(11) **EP 1 326 024 B1**
(45) Date de publication et mention de la délivrance du brevet: **12.04.2006**
(21) Numéro de dépôt: 02293121.6
(22) Date de dépôt: 17.12.2002
(51) Int. Cl.: F16B 2/06, F16B 5/06, B62D 27/06

(54) **Fixation pour assujettir une pièce à un support et la mettre en référence par rapport à son environnement, notamment une pièce de carrosserie de véhicule automobile**
Befestigung zum Anbringen eines Teiles an eine Basis und um es in Bezug auf seine Umgebung zu setzen, insbesondere eines Karosserieteiles eines Kraftfahrzeuges
Fastening for joining a piece to a support and to position it in relation to its environment, especially an automobile body part

(30) Priorité: 19.12.2001 FR 0116499
(43) Date de publication de la demande: 09.07.2003
(73) Titulaire: COMPAGNIE PLASTIC OMNIUM, 69007 Lyon (FR)
(72) Inventeur: Cordebar, Francis, 01150 Lagnieu (FR); Barbier, Pascal, 01100 Oyonnax (FR)
(74) Mandataire: Remy, Vincent Noel Paul

(56) Documents cités:
- EP-A- 0 612 635
- EP-A- 1 070 639
- FR-A- 2 806 133
- GB-A- 2 281 260

## Description

La présente invention concerne une fixation pour assujettir une pièce à un support et la mettre en référence par rapport à son environnement, notamment une pièce de carrosserie de véhicule automobile.

On sait que les pièces de carrosserie d'un véhicule automobile sont traditionnellement fixées au châssis par l'intermédiaire de pièces rapportées. Les pièces en tôle sont montées sur la structure préalablement au passage du véhicule en cataphorèse tandis que les pièces en matière plastique, qui ne résistent pas à une élévation durable de température jusqu'à environ 180° C, sont montées postérieurement à la cataphorèse, sur le châssis supportant les autres pièces.

De telles fixations posent des problèmes de mise en référence des pièces les unes par rapport aux autres, et ce d'autant plus que les pièces en matière plastique subissent une dilatation thermique que l'on ne peut négliger.

C'est pourquoi on utilise des fixations glissantes qui laissent aux pièces de carrosserie en matière plastique un degré de liberté dans la direction longitudinale du véhicule, afin d'autoriser leur allongement sans génération de contrainte susceptible de les déformer.

Quoiqu'il en soit, les fixations doivent être réglables pour que les pièces de carrosserie puissent être mises en référence les unes par rapport aux autres, essentiellement par ajustement de la distance entre chaque pièce et son support.

Mais ces fixations réglables, glissantes ou non, requièrent toujours de nombreuses manipulations lors du montage des pièces de carrosserie qu'elles supportent.

Par exemple, une fixation réglable utilisée pour assujettir une aile avant à la structure requiert les manipulations suivantes :
- assujettissement de la fixation à l'aile,
- fermeture du capot moteur pour présenter l'aile en position de fixation définitive avec mise en référence correcte par rapport au capot,
- serrage partiel des fixations pour immobiliser temporairement l'aile dans cette position,
- ouverture du capot pour libérer l'accès aux moyens de serrage des fixations,
- serrage des fixations pour immobiliser l'aile définitivement,
- fermeture du capot.

Dans cette hypothèse, l'opération de serrage partiel nécessite qu'il existe un accès aux moyens de serrage lorsque le capot est fermé, accès qui est généralement assez difficile, ce qui explique que ce serrage n'est que partiel à ce stade et qu'il faut ouvrir le capot pour dégager l'accès et ne serrer fermement la fixation que dans un second temps.

En conséquence, il est coûteux, en termes de main d'oeuvre, d'avoir à assurer le positionnement de l'aile sur la chaîne de montage du véhicule.

Du document GB 2 281 260 - A, on connaît une fixation réglable qui ne nécessite pas que la pièce fixée soit démontée pour bloquer la fixation, une fois celle-ci réglée par présentation de la pièce en position de fixation définitive, avec mise en référence correcte par rapport à une pièce voisine.

Mais dans cette fixation connue, le réglage ainsi obtenu n'est jamais définitivement garanti car la fixation n'est empêchée de se dérégler que par des moyens élastiques.

La présente invention vise à proposer une nouvelle fixation réglable qui facilite le positionnement d'une pièce de carrosserie, même en cas d'impossibilité d'accès à ses moyens de serrage lors du positionnement de la pièce.

La présente invention a tout d'abord pour objet une fixation pour assujettir une pièce à un support et la mettre en référence par rapport à son environnement, comportant :
- deux parties mobiles l'une par rapport à l'autre parallèlement à un axe de positionnement, destinées à se solidariser l'une à la pièce, l'autre au support,
- des moyens de retenue qui immobilisent les deux parties mobiles l'une par rapport à l'autre et ne les libèrent que lorsque la pièce exerce sur le support un effort supérieur à un seuil donné dans une direction parallèle à l'axe de positionnement,
**caractérisée en ce qu**'elle comporte :
- des moyens de blocage aptes à être actionnés pour immobiliser les deux parties mobiles l'une par rapport à l'autre,
- un absorbeur d'énergie, agencé sur la partie mobile destinée à être assujettie à la pièce, de manière à absorber l'énergie de chocs correspondant à des impacts sur la pièce, et
- une zone fusible, intégrée à la fixation pour désolidariser la pièce du support en cas de choc.

La fixation selon l'invention est notamment originale en ce qu'elle comporte deux parties mobiles selon un axe de positionnement, ces deux parties pouvant être immobilisées rune par rapport à l'autre, d'abord par des moyens de retenue, puis par des moyens de blocage.

La conception des moyens de retenue permet de fixer le seuil de force en-dessous duquel les deux parties mobiles restent solidaires l'une de l'autre et au-dessus duquel les deux parties mobiles se déplacent l'une par rapport à l'autre.

Ainsi, on peut faire en sorte que les deux parties mobiles se déplacent l'une par rapport à l'autre lorsqu'un opérateur positionne la pièce par rapport à son environnement en exerçant sur ladite pièce des efforts suffisants pour la déplacer et ainsi la mettre exactement en référence par rapport à son environnement. Ce positionnement peut par exemple s'effectuer à l'aide de cales s'appuyant sur des pièces voisines de celle en cours de mise en référence.

Ainsi positionnée, la pièce peut subir des contraintes internes qui génèrent des efforts visant à la ramener dans une position inappropriée. Les moyens de retenue de la fixation doivent être tels que ces efforts dus au retour élastique de la pièce demeurent inférieurs au seuil précité.

De plus, la fixation comporte, sur sa partie mobile destinée à être assujettie à la pièce, un absorbeur d'énergie agencé de manière à absorber l'énergie de chocs correspondant à des impacts sur la pièce.

Ainsi, la fixation selon ce mode de réalisation de l'invention procure une solution au problème des blessures que peut subir un piéton dont la tête vient frapper une pièce de carrosserie lors d'une collision avec le véhicule.

Par ailleurs, la fixation intègre une zone fusible pour désolidariser la pièce du support en cas de choc frontal du véhicule contre un obstacle, également connu sous l'appellation "choc Danner". Ainsi, l'invention vise à fournir une fixation qui répond au problème de la détérioration de la pièce de carrosserie en cas de choc du véhicule contre un obstade.

Dans un mode de réalisation particulier de l'invention, les moyens de retenue définissent deux seuils, à savoir un premier seuil pour les efforts exercés dans un premier sens, et un second seuil pour les efforts exercés dans un second sens, opposé au premier.

Le premier sens est celui dans lequel la pièce se rapproche du support et le second sens est celui dans lequel la pièce s'éloigne du support.

En d'autres termes, dans le premier sens, on pousse la pièce et dans le second sens, on la tire.

Dans une première variante de la fixation selon l'invention, les premier et second seuils sont égaux.

Cette variante est d'un réglage simple. Toutefois, dans certains cas, le retour élastique de la pièce peut générer des efforts très élevés, il est alors préférable que le premier seuil soit inférieur au second seuil afin que seul ce second seuil soit plus élevé que les efforts de retour élastique. Ainsi, l'utilisateur qui pousse la pièce et qui doit vaincre à la fois le retour élastique et les moyens de retenue n'a à fournir qu'un effort supérieur à la somme de l'effort de retour élastique et du premier seuil.

Dans un exemple particulier de réalisation, les moyens de retenue entre les deux parties mobiles de la fixation glissante sont constitués par des crans formés sur des portées en regard des deux parties mobiles et par des moyens élastiques appliquant ces portées l'une contre l'autre.

Ces crans peuvent être symétriques, ce qui correspond à la situation dans laquelle les premier et second seuils sont égaux.

Les crans peuvent aussi être dissymétriques de manière que le second seuil soit supérieur au premier seuil.

Dans un mode de réalisation particulier de l'invention, les moyens de blocage agissent sur les moyens de retenue en augmentant le seuil à partir duquel un effort de glissement de la pièce sur le support peut libérer les deux pièces mobiles.

Par exemple, les moyens de blocage peuvent comprendre une vis.

Dans un mode de réalisation particulier de l'invention, la fixation est agencée de manière qu'en plus du réglage selon la direction de positionnement, elle autorise un glissement de la pièce par rapport au support selon une direction de glissement qui est de préférence sensiblement perpendiculaire à la direction de positionnement.

Ainsi, la fixation constitue une fixation glissante qui est adaptée au montage de pièces de carrosserie en matière plastique sur le châssis d'un véhicule.

La présente invention a également pour objet un procédé de montage d'une pièce sur un support à l'aide d'une fixation telle que décrite ci-dessus, caractérisé en ce qu'il consiste à :
- assujettir l'une des parties mobiles à la pièce et l'autre partie mobile au support,
- déplacer la pièce selon l'axe de positionnement en exerçant sur ladite pièce un effort supérieur au seuil,
- une fois la pièce convenablement positionnée par rapport à son environnement, actionner les moyens de blocage de manière à immobiliser les deux parties mobiles l'une par rapport à l'autre.

Conformément à un mode de mise en oeuvre préféré, on assujettit les deux parties mobiles à la pièce et au support en fixant d'abord l'ensemble de la fixation à la pièce et en rapportant ensuite la pièce munie de la fixation sur le support.

De cette manière, on minimise le nombre de manipulations à effectuer sur le support, lequel ne nécessite aucune préparation particulière. Par exemple, si la pièce est une aile de carrosserie, on prépare cette dernière hors ligne de montage du véhicule et l'on rapporte l'aile avec la fixation sur la structure du véhicule.

Le procédé selon l'invention est particulièrement avantageux en ce qu'il évite à l'opérateur de rechercher un accès souvent difficile, parfois même inexistant, à la fixation, en même temps qu'il exerce sur la pièce l'effort nécessaire à son positionnement.

L'opérateur agit en effet sur la pièce pour la positionner et, grâce à l'invention, la pièce conserve sa mémoire de position, C'est-à-dire qu'elle reste en position après que l'opérateur a cessé d'exercer cet effort.

L'opérateur peut ensuite librement agir sur les moyens de blocage de manière à ce que les deux parties mobiles de la fixation soient définitivement immobilisées l'une par rapport à l'autre.

Ce procédé trouve une application particulièrement intéressante au montage d'une pièce de carrosserie de véhicule automobile, par exemple une aile avant, sur une pièce de structure dudit véhicule, ce dernier comportant un ouvrant, par exemple un capot moteur, recouvrant ladite pièce de structure et dégageant un accès à la fixation lorsqu'il est ouvert.

Ce procédé est caractérisé en ce qu'il consiste à :
- assujettir à la pièce de carrosserie une partie mobile d'une fixation telle que décrite ci-dessus,
- ouvrir l'ouvrant pour dégager un accès à la pièce de structure,
- assujettir l'autre partie mobile de la fixation à la pièce de structure,
- refermer l'ouvrant,
- déplacer la pièce de carrosserie selon l'axe de positionnement pour la positionner précisément par rapport à son environnement,
- ouvrir l'ouvrant pour dégager l'accès à la fixation,
- actionner les moyens de blocage pour immobiliser les deux parties mobiles l'une par rapport à l'autre.

Appliqué particulièrement à une aile avant qui doit être mise en référence par rapport à un capot moteur, ce procédé consiste à :
- assujettir à l'aile une partie mobile de la fixation,
- ouvrir le capot moteur pour dégager un accès à la pièce de structure,
- assujettir l'autre partie mobile de la fixation à la pièce de structure, la fixation étant orientée de manière que l'axe de positionnement soit sensiblement perpendiculaire à la direction longitudinale du véhicule,
- refermer le capot moteur,
- placer éventuellement des cales entre les bords en regard du capot et de l'aile,
- rapprocher l'aile du capot moteur pour la positionner précisément par rapport audit capot moteur,
- ouvrir le capot moteur pour dégager l'accès à la fixation,
- actionner les moyens de blocage pour immobiliser les deux parties mobiles l'une par rapport à l'autre.

On comprend que, dans cette application particulière d'une aile avant à positionner par rapport au capot moteur, la fixation glissante et le procédé de montage selon l'invention sont particulièrement avantageux car l'utilisateur n'a plus besoin de maintenir l'aile après l'avoir positionnée par rapport au capot. II peut donc, ensuite, relever le capot moteur pour actionner les moyens de blocage et bloquer définitivement les deux parties mobiles de la fixation glissante, afin d'immobiliser l'aile dans sa position adéquate.

De manière avantageuse, lorsqu'on assujettit à l'aile la partie mobile qui lui est destinée, cette partie mobile est déjà assemblée à l'autre partie mobile destinée à la pièce de structure, de sorte qu'on assujettit ensuite l'autre partie mobile à la pièce de structure en rapportant l'aile munie de l'ensemble de la fixation sur ladite pièce de structure.

Dans le but de faciliter la compréhension de l'invention, on va maintenant en décrire un mode de réalisation donné à titre d'exemple non limitatif, en référence aux dessins annexés dans lesquels :
- la figure 1 est une section verticale d'une région d'un véhicule automobile située au-dessus d'une roue avant gauche dudit véhicule,
- la figure 2 est une vue rapprochée de la zone II de la figure 1,
- la figure 3 est une vue en coupe selon III-III de la figure 2,
- la figure 4 est une vue de dessus de la figure 2,
- la figure 5 est une vue de dessus de la figure 3,
- la figure 6 est une vue en perspective du plot de glissement seul.

Au voisinage de sa roue avant 1, le véhicule comporte une aile 2 qui doit se positionner par rapport à trois pièces de carrosserie environnantes, à savoir, le long de son bord arrière, une portière avant (non représentée), le long de son bord supérieur, un capot 3, le long de son bord avant, un pare-chocs (non représenté).

L'aile 2 doit être convenablement positionnée par rapport à ces pièces environnantes et notamment par rapport au capot 3.

A cet effet, l'aile 2 est montée sur la structure du véhicule, matérialisée ici par un longeron supérieur 4, par l'intermédiaire d'une fixation glissante 5 selon l'invention.

Cette fixation 5 comprend un socle 6 en matière plastique qui se compose d'une plate-forme plane 7 parallèle au longeron et de deux pieds allongés 8 qui laissent entre eux un espace au-dessus du longeron.

Le socle 6 comporte un pion de positionnement 9 et deux languettes d'encliquetage 10 en saillie de la face inférieure de sa plate-forme 7. Le pion 9 se situe au milieu du socle 7 et pénètre dans un orifice 11 ménagé à cet effet dans le longeron supérieur 4, tandis que les languettes d'encliquetage 10, situées aux deux extrémités longitudinales du socle, pénètrent dans des ouvertures 12 prévues à cet effet dans le longeron 4 et se crochètent par retour élastique sur des surfaces de retenue 13 situées en retrait de la surface extérieure du longeron 4, à l'intérieur de celui-ci, de manière à assurer la solidarisation du socle 6 au longeron 4 sans risque qu'un objet ne vienne malencontreusement désencliqueter les languettes 10, par exemple lors d'un choc.

On voit que le positionnement et la fixation du socle 6 sur le longeron 4 ne posent aucune difficulté et peuvent s'effectuer très rapidement, sans outil.

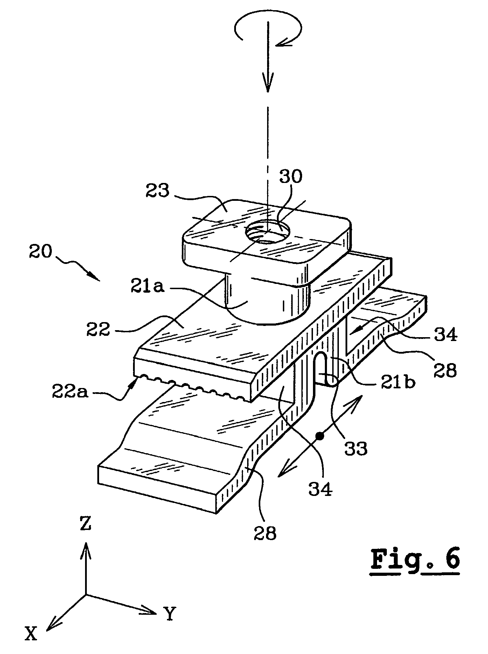

Un plot de glissement 20, représenté seul sur la figure 6, se solidarise au socle 6. Ce plot 20 comprend un corps 21 dont une moitié supérieure 21a est cylindrique et une moitié inférieure 21b est prismatique.

Ces deux moitiés 21a et 21b sont séparées par une collerette médiane 22 de forme rectangulaire.

Au sommet du corps 21, une seconde collerette rectangulaire 23, désignée collerette supérieure dans la suite de la description, s'étend parallèlement à la collerette médiane 22. Sa largeur est égale au diamètre de la moitié cylindrique 21a du corps et sa longueur s'étend selon la direction transversale Y du véhicule.

Les grands côtés de la collerette médiane 22 se superposent aux petits côtés de la collerette supérieure. Sa longueur s'étend selon la direction longitudinale du véhicule.

Le plot de glissement 20 s'appuie sur le socle 6 par la collerette médiane 22, dont la face inférieure 22a constitue une portée d'appui.

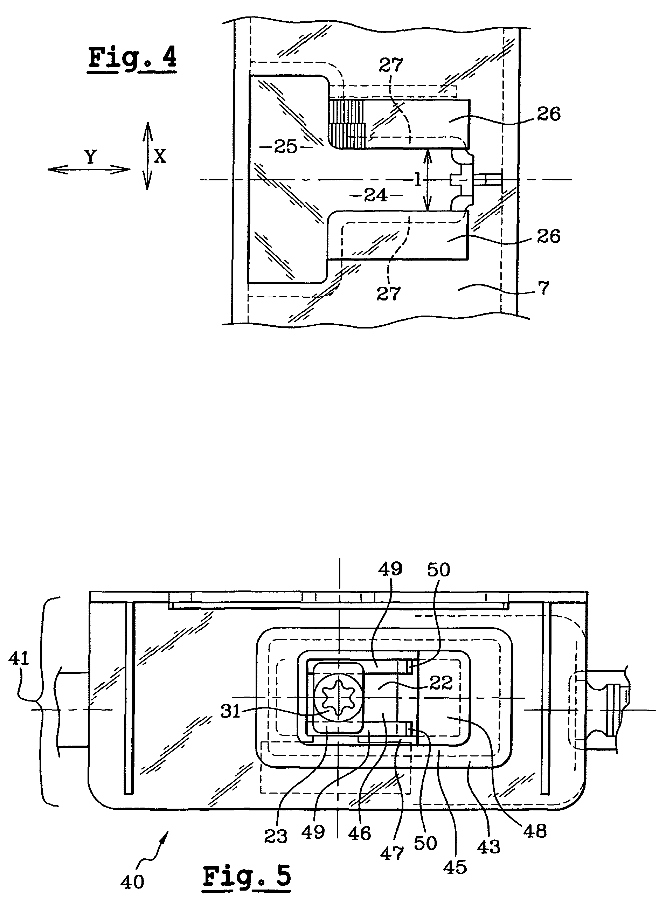

Comme on le voit à la figure 4, une lumière 24 traverse la plate-forme 7 du socle. Sa largeur ℓ est légèrement supérieure à celle de la moitié inférieure 21b du corps et sa longueur s'étend selon la direction transversale Y du véhicule.

Compte tenu des dimensions de cette lumière 24, seule une translation transversale (selon Y) du plot de glissement 20 est possible, par glissement de sa moitié inférieure 21b dans ladite lumière.

La lumière 24 est ouverte à l'une de ses extrémités sur une découpe 25 de la plate-forme 7, dimensionnée de manière à permettre l'introduction de la moitié inférieure du plot de glissement.

Une fois le plot de glissement 20 introduit dans la lumière 24, la collerette médiane 22 prend appui sur la plate-forme 7 de part et d'autre de la lumière, en des régions en forme de bandes 26 constituant une portée d'appui en regard de celle 22a de la collerette médiane 22.

Des crans sont formés sur les deux portées d'appui 22a, 26 en regard, sous la forme de stries orientés selon la direction longitudinale X du véhicule. Ces stries s'opposent au déplacement du plot de glissement 20 dans la direction transversale Y, à l'intérieur de la lumière 24 du socle.

On comprend que pour vaincre la résistance des stries, il faut permettre aux surfaces en regard de la collerette médiane et du socle de s'écarter légèrement l'une de l'autre pour désengrener les crans, ou bien il faut déformer les crans. Dans les deux cas, il faut fournir un effort qui est d'autant plus important que la collerette médiane s'appuie fortement contre le socle.

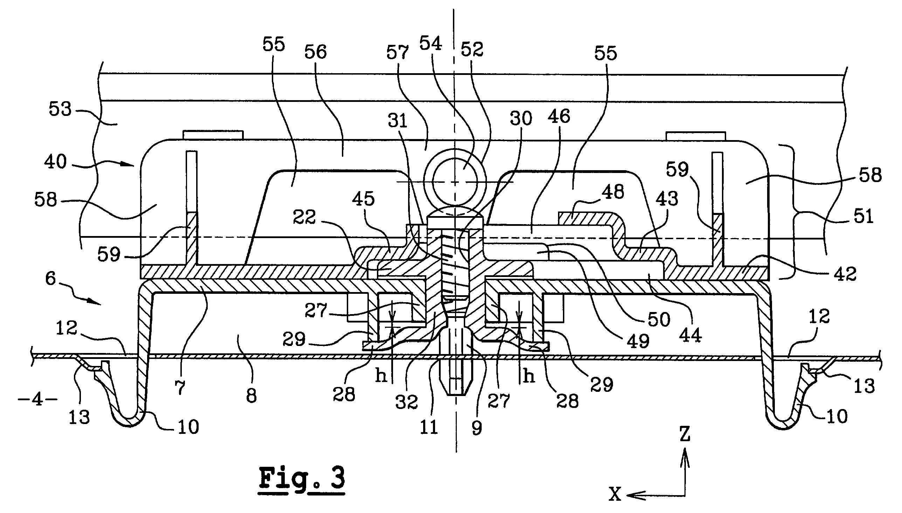

Comme on le voit à la figure 3, la lumière 24 du socle est bordée par deux rebords 27 qui guident le plot de glissement 20 en le maintenant sensiblement perpendiculaire à la plate-forme 7 du socle.

A partir de l'extrémité inférieure de la moitié inférieure prismatique 21b du corps, deux languettes élastiques 28 s'étendent longitudinalement dans des directions opposées. Chaque languette 28 est conformée en escalier et son épaisseur va en rétrécissant depuis la base du corps jusqu'à l'extrémité de ladite languette.

Sur le socle 6, deux nervures 29 s'étendent vers le bas depuis la plate-forme 7, parallèlement aux rebords 27 de la lumière 24 et juste au droit des extrémités libres des deux languettes élastiques 28. Chaque nervure comporte un chanfrein d'extrémité 29a provoquant la déformation et l'engagement d'une languette élastique 28 lors du passage du plot de glissement de la découpe 25 à la lumière 24.

Chaque languette élastique 28 prend ainsi appui sur une nervure 29 tandis qu'elle est légèrement espacée du rebord 27 de la lumière à la base du corps cylindrique, d'un jeu h qui laisse un débattement axial au plot de glissement 20 selon la direction verticale Z, moyennant une légère déformation élastique supplémentaire desdites languettes.

Comme précédemment expliqué, le déplacement du plot de glissement 20 dans la lumière 24 nécessite que les crans des deux portées d'appui en regard 22a et 26 de la languette médiane 22 et de la plate-forme 7 se désengrènent, ce qui est rendu possible par le soulèvement du plot sur la hauteur h qui est supérieure à la profondeur des crans.

Les languettes élastiques 28 ont donc pour fonction de retenir le plot de glissement 20 dans le socle 6 et d'appliquer les deux portées d'appui 22a et 26 l'une contre l'autre avec une force donnée qui détermine un premier seuil de résistance aux déplacements du plot dans la rainure.

En d'autres termes, dans cette configuration du plot de glissement, il n'est possible de le déplacer selon la direction de positionnement Y qu'en exerçant sur lui une force supérieure au seuil de résistance précité.

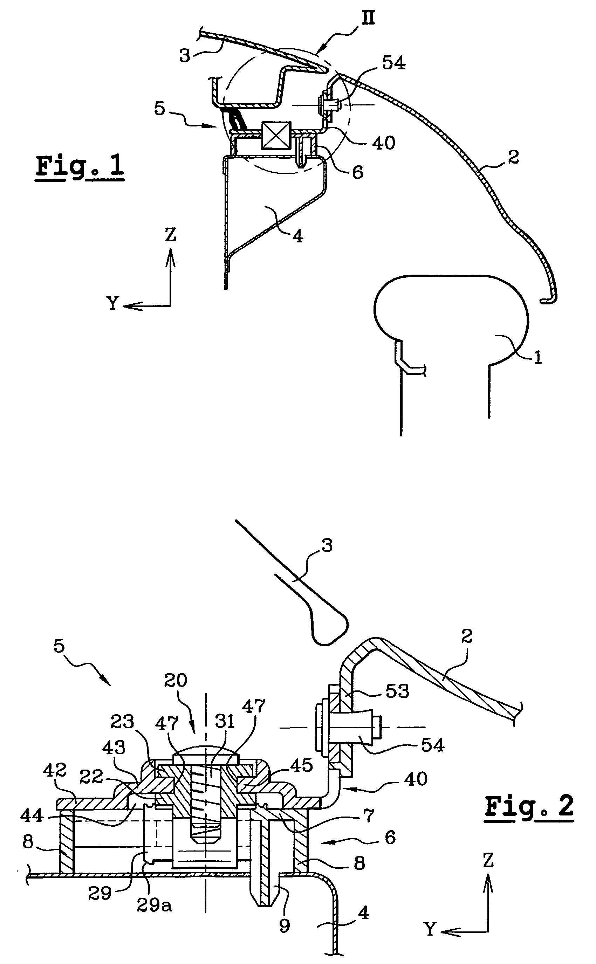

On voit, sur la figure 2, que chaque nervure 29 s'étend transversalement sur une longueur sensiblement égale à la longueur de la lumière 24, afin que les languettes élastiques 28 puissent s'appuyer sur les nervures 29 dans toutes les positions du plot de glissement 20 dans la lumière 24.

Le corps 21 est traversé axialement par un alésage central 30 destiné à recevoir une vis de blocage 31 qui s'y engage par l'extrémité supérieure dudit alésage.

A son extrémité inférieure, l'alésage présente deux portées coniques 32 qui réduisent sa section transversale. Ces deux portées 32 sont situées en opposition l'une de l'autre selon la direction longitudinale X.

La partie inférieure prismatique 21b du corps est par ailleurs fendue en 33 à partir de son extrémité inférieure, comme le montre la figure 6, ce qui lui permet d'accroître la largeur de sa base au-delà de la largeur ℓ de la lumière. La fente 33 débouche dans l'alésage 30.

La forme prismatique de la moitié inférieure 21b du corps, avec une base susceptible de s'élargir davantage, est propice à une immobilisation du plot 20 dans la lumière 24.

En effet, lorsque la vis de blocage progresse dans l'alésage par vissage en repoussant vers l'extérieur les portées coniques 32 dudit alésage, la base de la moitié inférieure prismatique 21b du corps s'élargit par écartement de la fente 33 et ladite moitié prismatique se bloque dans la lumière, en prenant appui sur les bords 27 de ladite lumière. Les faces latérales grainées 34 du corps améliorent ce blocage en s'opposant au glissement desdites faces contre les bords 27.

De plus, l'écartement du corps au niveau de sa fente 33 tend à enfoncer ledit corps dans le socle, et donc accroît la force avec laquelle les deux portées d'appui en regard 22a et 26 s'appliquent l'une contre l'autre.

On comprend que le serrage de la vis de blocage conditionne la force avec laquelle le plot de glissement se maintient en position dans la lumière.

Ainsi, plus la vis de blocage descend bas dans l'alésage, plus le plot de glissement s'immobilise par rapport au socle.

La résistance au déplacement du plot est définie par un nouveau seuil de force à exercer sur le plot pour le déplacer malgré les actions cumulées des crans et des faces grainées. Ce nouveau seuil dépend directement du serrage de la vis de réglage.

Sur les figures 2 à 5, le plot de glissement est représenté bloqué sur le socle, la vis de blocage étant entièrement engagée dans l'alésage.

Au sens de la présente invention, le socle 6 et le plot de glissement 20 constituent deux parties mobiles de la fixation.

On remarque que les deux collerettes, supérieure 23 et médiane 22, du plot de glissement, définissent entre elles un espace formant une glissière selon la direction longitudinale X.

La fonction de glissement de la fixation, qui permet à l'aile de se dilater suivant la direction longitudinale du véhicule, est assurée par cette glissière et par une équerre 40 que l'on va maintenant décrire.

La partie horizontale 41 de l'équerre 40 est constituée par une plaque 42 dans laquelle est formé un premier dégagement rectangulaire en saillie 43 qui libère un espace 44 au-dessus du socle 7 pour le logement de la collerette médiane 22.

Ce premier dégagement 43 comprend une paroi plane 45 percée en son milieu d'une ouverture 46 rectangulaire délimitée par une nervure 47.

Ladite ouverture 46 est couverte à une extrémité, sur environ un tiers de sa longueur, par une paroi plane 48 qui laisse entre elle et le socle 7 un espace suffisant pour loger la moitié supérieure du plot de glissement.

Les deux tiers restants de l'ouverture 46 sont munis de rampes 49 longitudinales, dont l'épaisseur est très légèrement inférieure à la distance entre les collerettes 22 et 23 et dont les bords en regard sont espacés d'une distance constante très légèrement supérieure au diamètre de la moitié supérieure cylindrique 21a du plot de glissement.

On comprend que ces rampes peuvent glisser entre les deux collerettes du plot, réalisant ainsi la fonction de glissement souhaitée entre l'équerre 40 et le socle 6.

La différence de hauteur selon Z entre la paroi plane 48 et les rampes 49 est suffisante pour que l'équerre puisse coiffer le plot de glissement 20 au droit de ladite paroi 48, puis coulisser en amenant ses deux rampes 49 entre les collerettes 22, 23. L'engagement des rampes entre les collerettes est facilité par les chanfreins 50 à l'extrémité de chaque rampe dirigée vers la paroi 48.

Ainsi, cet agencement de la partie horizontale 41 de l'équerre permet le glissement de l'équerre 40 par rapport au plot de glissement 20 selon la direction longitudinale X du véhicule.

La partie verticale 51 de l'équerre est une plaque dans laquelle est prévu un orifice 52 pour sa solidarisation avec le retour 53 de l'aile 2, ici à l'aide d'un rivet en matière plastique 54.

Comme on le voit à la figure 3, ladite plaque est découpée dans sa région centrale où elle comporte deux échancrures 55 qui ne laissent qu'une étroite bande de matière 56 le long du bord supérieur de l'équerre et une platine de fixation 57 au milieu de cette bande, cette platine étant traversée par l'orifice 52 de fixation à l'aile.

Ainsi, la partie verticale de l'équerre n'est réunie à la partie horizontale que par ses portions d'extrémité 58 qui forment un angle droit avec ladite partie horizontale. Ces portions d'extrémité sont en outre rigidifiées chacune par une nervure transversale 59 perpendiculaire aux parties horizontale 41 et verticale 51.

La partie verticale de l'équerre, fragilisée par les échancrures 55, remplit deux fonctions, à savoir une fonction d'absorption des chocs à composante verticale, du type choc de tête de piéton, et une fonction de protection de l'aile et de la fixation glissante par destruction de l'équerre.

La première fonction d'absorption de chocs est remplie grâce à l'élasticité de l'étroite bande 56 de matière dont la largeur étant suffisamment petite pour autoriser une déformation dans la direction verticale.

La fusibilité résulte également de la largeur très réduite de la bande de matière, laquelle ne résiste pas à un effort en compression ou en traction selon la direction longitudinale.

L'ensemble de l'équerre 40, avec son agencement formant glissière de la partie horizontale, peut coulisser librement par rapport au plot de glissement 20 selon la direction longitudinale du véhicule.

On constate que le serrage de la vis de blocage 31 n'a aucune incidence sur ce glissement du fait que la vis de blocage ne modifie pas l'écartement entre les deux collerettes supérieure et médiane.

Le glissement de l'équerre selon la direction longitudinale est en outre facilité par le fait que sa partie horizontale 41 s'appuie sur la plate-forme 7 du socle, qui offre une surface lisse en matière plastique, de sorte que le glissement de l'équerre n'implique que des glissements de surfaces en matière plastique lisses entre elles. On notera que cette disposition constitue un réel avantage par rapport à des fixations glissantes de l'état de la technique dans lesquelles la pièce mobile coulisse directement sur le longeron.

On comprend donc que le glissement longitudinal de l'aile par rapport à la structure du véhicule est rendu possible par le couple formé par l'équerre et le plot de glissement, tandis que le réglage transversal de l'aile par rapport aux pièces de carrosserie environnantes est rendu possible par le couple formé par le plot de glissement et le socle.

On va maintenant décrire la manière dont un opérateur positionne l'aile par rapport aux pièces de carrosserie sur la chaîne de montage du véhicule. A ce stade, le véhicule est muni de son capot moteur et des portières avant. L'aile se positionne par rapport à ces pièces de carrosserie environnantes.

La fixation glissante selon l'invention est tout d'abord assemblée.

A cet effet, le plot de glissement 20 est introduit dans la lumière 24 du socle et la collerette supérieure 23 du plot de glissement est introduite dans l'ouverture 46 de la partie horizontale 41 de l'équerre, au droit de la paroi 48. Puis l'équerre est glissée longitudinalement, selon la direction X, pour amener les rampes 49 entre les collerettes supérieure 23 et médiane 22 du plot de glissement.

La fixation assemblée est ensuite montée sur l'aile 2 par serrage du rivet 52 de la partie verticale 51 de l'équerre sur le retour 53 de l'aile.

Dans la fixation assemblée, la vis de blocage 31 est simplement engagée dans l'alésage axial 30 du plot de glissement 20 mais n'est pas vissée complètement de manière que son extrémité n'appuie pas contre les portées coniques 32 de l'alésage. Le plot de glissement est donc retenu en position dans la lumière 24 du socle 6 uniquement par l'élasticité des languettes 28.

Ces languettes exercent une légère traction sur le plot de glissement, ce qui empêche son déplacement dans la lumière grâce aux stries en regard des portées d'appui 22a du plot et du socle 26, tant que l'effort transversal exercé sur le plot ne dépasse pas un certain seuil.

Compte tenu de la géométrie symétrique des stries, ce seuil est le même, que la force exercée sur le plot soit dirigée vers l'intérieur ou vers l'extérieur du véhicule.

Le plot de glissement 20 est positionné à l'extrémité de la lumière 24 la plus proche de l'aile, de manière à pouvoir se déplacer ensuite sur toute la course offerte par cette lumière.

Des cales (non représentées) sont positionnées sur le capot et sur la portière avant pour déterminer le jeu qu'il convient de préserver entre l'aile d'une part et le capot et la portière d'autre part. Ce jeu doit être constant et répondre à des critères prédéterminés.

L'aile 2 et la fixation montée sur l'aile sont apportées sur le véhicule. Le socle 6 est alors encliqueté sur le longeron 4 grâce au pion de positionnement 9 et aux languettes d'encliquetage 10.

Du fait que la fixation a été préalablement positionnée avec le plot de glissement 20 en position de fin de course dans la lumière, l'aile doit se trouver à distance des cales. L'opérateur n'a plus qu'à exercer une pression sur l'aile dans la direction transversale pour l'appliquer contre les cales.

Lors de ce mouvement, le plot de glissement se déplace dans la lumière car l'effort exercé par l'opérateur sur l'aile se traduit par un effort du plot de glissement sur le socle supérieur au seuil à partir duquel les stries de la collerette médiane et du socle se désolidarisent.

Ce seuil est toutefois supérieur à l'effort que l'aile exerce sur la fixation lorsque l'opérateur la lâche et cesse d'exercer la pression de positionnement.

Il ne reste plus qu'à ouvrir le capot pour retirer les cales et serrer la vis de blocage, laquelle exerce alors une pression sur les portées coniques de l'alésage et écarte la base de la moitié inférieure prismatique 21b du plot de glissement, dont les faces latérales 34 s'immobilisent contre les bords 27 de la lumière.

Par cette opération, l'opérateur accroît considérablement le seuil à partir duquel le plot de glissement est susceptible de coulisser dans la lumière.

En d'autres termes, ce seuil est rendu supérieur à tous les efforts auxquels l'aile est susceptible d'être soumise au cours de la vie du véhicule et le déplacement du plot de glissement dans la lumière est rendu pratiquement impossible.

L'aile est ainsi définitivement positionnée par rapport au capot.

Indépendamment de ce serrage, le plot de glissement forme avec l'équerre un couple de pièces autorisant le glissement longitudinal de l'aile à la manière de toute fixation glissante connue.

Les chocs que pourrait subir l'aile sont de deux natures.

Si la tête d'un piéton vient heurter le sommet de l'aile, celle-ci subit un effort brutal à composante verticale et l'étroite bande 46 de matière de la partie verticale de l'équerre se déforme en absorbant une partie de l'énergie du choc.

Si un choc frontal vient percuter le véhicule, le pare-chocs transmet à l'aile un effort dirigé vers l'arrière du véhicule et l'aile a tendance à gonfler. Dans ce cas, l'étroite bande de matière de la partie verticale de l'équerre se brise et l'aile se désolidarise du châssis. Seule l'équerre est endommagée, préservant non seulement l'aile mais également le socle et le plot de glissement.

Il est bien entendu que le mode de réalisation décrit ci-dessus ne présente aucun caractère limitatif et qu'il pourra recevoir toute modification désirable sans sortir du cadre de l'invention.

## Revendications

1. Fixation pour assujettir une pièce à un support et la mettre en référence par rapport à son environnement, comportant :
- deux parties (6, 20) mobiles l'une par rapport à l'autre parallèlement à un axe de positionnement (Y), destinées à se solidariser l'une à la pièce, l'autre au support,
- des moyens de retenue (22a, 26, 28) qui immobilisent les deux parties mobiles l'une par rapport à l'autre et ne les libèrent que lorsque la pièce (2) exerce sur le support (4) un effort supérieur à un seuil donné dans une direction parallèle à l'axe de positionnement,
**caractérisée en ce qu'**elle comporte :
- des moyens de blocage (31) aptes à être actionnés pour immobiliser les deux parties mobiles l'une par rapport à l'autre,
- un absorbeur d'énergie (56), agencé sur la partie mobile destinée à être assujettie à la pièce, de manière à absorber l'énergie de chocs correspondant à des impacts sur la pièce, et
- une zone fusible (56), intégrée à la fixation pour désolidariser la pièce du support en cas de choc.

2. Fixation selon la revendication 1, **caractérisée en ce que** les moyens de retenue définissent deux seuils, à savoir un premier seuil pour les efforts exercés dans un premier sens, et un second seuil pour les efforts exercés dans un second sens, opposé au premier.

3. Fixation selon la revendication 2, **caractérisée en ce que** les premier et second seuils sont égaux.

4. Fixation selon la revendication 2, **caractérisée en ce que** le premier sens est celui dans lequel la pièce (2) se rapproche du support (4) et le second sens est celui dans lequel la pièce s'éloigne du support, et **en ce que** le premier seuil est inférieur au second seuil.

5. Fixation selon l'une quelconque des revendications 1 à 4, **caractérisée en ce que** les moyens de retenue sont constitués par des crans formés sur des portées (22a, 26) en regard des deux parties mobiles et par des moyens élastiques (28) appliquant ces portées l'une contre l'autre.

6. Fixation selon la revendication 5, **caractérisée en ce que** les crans sont symétriques.

7. Fixation selon la revendication 5, **caractérisée en ce que** les crans sont dissymétriques.

8. Fixation selon l'une quelconque des revendications 1 à 7, **caractérisée en ce que** les moyens de blocage (31) agissent sur les moyens de retenue en augmentant le seuil à partir duquel un effort de glissement de la pièce sur le support peut libérer les deux pièces mobiles.

9. Fixation selon l'une quelconque des revendications 1 à 8, **caractérisé en ce qu'**elle est agencée de manière qu'en plus du réglage selon la direction de positionnement, elle autorise un glissement de la pièce par rapport au support selon une direction de glissement (X) qui est de préférence sensiblement perpendiculaire à la direction de positionnement (Y).

10. Procédé de montage d'une pièce sur un support à l'aide d'une fixation selon l'une quelconque des revendications 1 à 9, **caractérisé en ce qu'**il consiste à :
- assujettir l'une (20) des parties mobiles à la pièce (2) et l'autre partie mobile (6) au support (4),
- déplacer la pièce (2) selon l'axe de positionnement (Y) en exerçant sur ladite pièce un effort supérieur au seuil,
- une fois la pièce convenablement positionnée par rapport à son environnement, actionner les moyens de blocage (31) de manière à immobiliser les deux parties mobiles l'une par rapport à l'autre.

11. Procédé selon la revendication 10, **caractérisé en ce qu'**on assujettit les parties mobiles à la pièce et au support en fixant d'abord l'ensemble de la fixation à la pièce et en rapportant ensuite la pièce munie de la fixation sur le support.

12. Procédé de montage d'une pièce de carrosserie sur une pièce de structure d'un véhicule automobile, ce dernier comportant un ouvrant recouvrant ladite pièce de structure et dégagent un accès à la pièce de structure lorsqu'il est ouvert, à l'aide d'une fixation selon l'une quelconque des revendications 1 à 11, **caractérisé en ce qu'**il consiste à:
- assujettir à la pièce de carrosserie une partie mobile de la fixation,
- ouvrir l'ouvrant pour dégager un accès à la pièce de structure,
- assujettir l'autre partie mobile de la fixation à la pièce de structure,
- refermer fowrant,
- déplacer la pièce de carrosserie selon l'axe de positionnement pour la positionner précisément par rapport à son environnement,
- ouvrir l'ouvrant pour dégager l'accès à la fixation,
- actionner les moyens de blocage pour immobiliser les deux parties mobiles l'une par rapport à l'autre.

13. Procédé de montage d'une aile avant de véhicule automobile sur une pièce de structure dudit véhicule, ce dernier comportant un capot moteur recouvrant ladite pièce de structure et dégageant un accès à la pièce de structure, **caractérisé en ce qu'**il consiste à :
- assujettir à l'aile une partie mobile d'une fixation selon l'une quelconque des revendications 1 à 9,
- ouvrir le capot moteur pour dégager un accès à la pièce de structure,
- assujettir l'autre partie mobile de la fixation à la pièce de structure, la fixation étant orientée de manière que l'axe de positionnement soit sensiblement et perpendiculaire à la direction longitudinale du véhicule,
- refermer le capot moteur,
- placer éventuellement des cales entre des bords en regard du capot et de l'aile,
- rapprocher l'aile du capot moteur pour la positionner précisément par rapport audit capot moteur,
- ouvrir le capot moteur pour dégager l'accès à la fixation,
- actionner les moyens de blocage pour immobiliser les deux parties mobiles l'une par rapport à l'autre.

14. Procédé selon la revendication 13, **caractérisé en ce que** lorsqu'on assujettit à l'aile la partie mobile qui lui est destinée, cette partie mobile est déjà assemblée à l'autre partie mobile destinée à la pièce de structure, de sorte qu'on assujettit ensuite l'autre partie mobile à la pièce de structure en rapportant l'aile munie de l'ensemble de la fixation sur ladite pièce de structure.

## Patentansprüche

1. Befestigungseinrichtung zum Befestigen eines Teils an einem Träger und zu seinem Positionieren in Bezug auf seine Umgebung, wobei die Befestigungseinrichtung Folgendes umfasst:
- zwei parallel zu einer Positionierungsachse (Y) relativ zueinander bewegliche Elemente (6, 20), die dafür vorgesehen sind, dass das eine Element fest mit dem Teil und das andere Element fest mit dem Träger verbunden wird,
- Haltemittel (22a, 26, 28), die die beiden relativ zueinander beweglichen Elemente arretieren und sie nur dann lösen, wenn das Teil (2) auf den Träger (4) eine über einem bestimmten Schwellenwert liegende Kraft in einer Richtung parallel zur Positionierungsachse ausübt,
**dadurch gekennzeichnet, dass** die Befestigungseinrichtung Folgendes umfasst:
- Arretiermittel (31), die betätigt werden können, um die beiden relativ zueinander beweglichen Elemente zu arretieren,
- einen Energieabsorber (56), der derart auf dem beweglichen Element angeordnet ist, welches zur Befestigung an dem Teil vorgesehen ist, dass er die Energie von Stößen absorbiert, die Aufprallereignissen auf das Teil entsprechen, und
- eine Sollbruchzone (56), die in der Befestigungseinrichtung integriert ist, um das Teil im Fall eines Stoßes vom Träger zu lösen.

2. Befestigungseinrichtung nach Anspruch 1, **dadurch gekennzeichnet, dass** die Haltemittel zwei Schwellenwerte definieren, und zwar einen ersten Schwellenwert für die in einer ersten Richtung wirkenden Kräfte, und einen zweiten Schwellenwert für die in einer zweiten Richtung wirkenden Kräfte, wobei die zweite Richtung der ersten Richtung entgegengesetzt ist.

3. Befestigungseinrichtung nach Anspruch 2, **dadurch gekennzeichnet, dass** der erste und der zweite Schwellenwert gleich sind.

4. Befestigungseinrichtung nach Anspruch 2, **dadurch gekennzeichnet, dass** die erste Richtung diejenige ist, in der sich das Teil (2) dem Träger (4) nähert und dass die zweite Richtung diejenige ist, in der sich das Teil vom Träger entfernt, und **dadurch gekennzeichnet, dass** der erste Schwellenwert kleiner als der zweite Schwellenwert ist.

5. Befestigungseinrichtung nach einem der Ansprüche 1 bis 4, **dadurch gekennzeichnet, dass** die Haltemittel aus Zähnen, die auf Kanten (22a, 26) gegenüber den beiden beweglichen Elementen gebildet sind, und aus elastischen Mitteln (28) bestehen, die diese Kanten aneinander drücken.

6. Befestigungseinrichtung nach Anspruch 5, **dadurch gekennzeichnet, dass** die Zähne symmetrisch sind.

7. Befestigungseinrichtung nach Anspruch 5, **dadurch gekennzeichnet, dass** die Zähne unsymmetrisch sind.

8. Befestigungseinrichtung nach einem der Ansprüche 1 bis 7, **dadurch gekennzeichnet, dass** die Arretiermittel (31) auf die Haltemittel wirken, indem sie den Schwellenwert heraufsetzen, ab dem eine Gleitkraft des Teils auf den Träger die beiden beweglichen Teile lösen kann.

9. Befestigungseinrichtung nach einem der Ansprüche 1 bis 8, **dadurch gekennzeichnet, dass** sie derart angeordnet ist, dass sie zusätzlich zur Einstellung in der Positionierungsrichtung ein Gleiten des Teils in Bezug auf den Träger in einer Gleitrichtung (X) erlaubt, die vorzugsweise im Wesentlichen senkrecht zur Positionierungsrichtung (Y) ist.

10. Verfahren zum Anbringen eines Teils an einem Träger mit Hilfe einer Befestigungseinrichtung nach einem der Ansprüche 1 bis 9, **dadurch gekennzeichnet, dass** das Verfahren die folgenden Schritte beinhaltet:
- Befestigen des einen (20) der beweglichen Elemente am Teil (2) und des anderen beweglichen Elements (6) am Träger (4),
- Verschieben des Teils (2) in Richtung der der Positionierungsachse (Y), indem eine Kraft auf das Teil ausgeübt wird, die größer als der Schwellenwert ist,
- sobald das Teil in Bezug auf seine Umgebung zufrieden stellend positioniert ist, Betätigen der Arretiermittel (31) in der Weise, dass die beiden relativ zueinander beweglichen Elemente arretiert werden.

11. Verfahren nach Anspruch 10, **dadurch gekennzeichnet, dass** die beweglichen Elemente am Teil und am Träger befestigt werden, indem zuerst die Befestigungseinrichtung am Teil befestigt und anschließend das mit der Befestigungseinrichtung versehene Teil am Träger angebracht wird.

12. Verfahren zum Anbringen eines Karosserieteils an einem Strukturteil eines Kraftfahrzeuges, wobei letzteres eine Klappe aufweist, die das Strukturteil bedeckt und einen Zugang zum Strukturteil freigibt, wenn sie offen ist, mit Hilfe einer Befestigungseinrichtung nach einem der Ansprüche 1 bis 11, **dadurch gekennzeichnet, dass** das Verfahren die folgenden Schritte beinhaltet:
- Befestigen eines beweglichen Elements der Befestigungseinrichtung am Karosserieteil,
- Öffnen der Klappe, um einen Zugang zum Strukturteil freizugeben,
- Befestigen des anderen beweglichen Elements der Befestigungseinrichtung am Strukturteil,
- Schließen der Klappe,
- Verschieben des Karosserieteils in Richtung der Positionierungsachse, um es in Bezug auf seine Umgebung zu positionieren,
- Öffnen der Klappe, um den Zugang zur Befestigung freizugeben,
- Betätigen der Arretiermittel, um die beiden relativ zueinander beweglichen Elemente zu arretieren.

13. Verfahren zum Anbringen eines vorderen Kotflügels für Kraftfahrzeuge an ein Strukturteil des Fahrzeuges, wobei dieses eine Motorhaube umfasst, die den Strukturteil bedeckt und einen Zugang zum Strukturteil freigibt, **dadurch gekennzeichnet, dass** es folgende Schritte beinhaltet:
- Befestigen eines beweglichen Elements einer Befestigungseinrichtung am Kotflügel nach einem der Ansprüche 1 bis 9,
- Öffnen der Motorhaube, um einen Zugang zum Strukturteil freizugeben,
- Befestigen des anderen beweglichen Elements der Befestigungseinrichtung am Strukturteil, wobei die Befestigungseinrichtung derart ausgerichtet ist, dass die Positionierungsachse im Wesentlichen senkrecht zur Längsrichtung des Fahrzeuges ist,
- Schließen der Motorhaube,
- eventuell Einsetzen von Keilen zwischen den Kanten gegenüber der Haube und dem Kotflügel,
- Annähern des Kotflügels an die Motorhaube, um ihn in Bezug auf die Motorhaube exakt zu positionieren,
- Öffnen der Motorhaube, um den Zugang zur Befestigungseinrichtung freizugeben,
- Betätigen der Arretiermittel, um die beiden relativ zueinander beweglichen Elemente zu arretieren.

14. Verfahren nach Anspruch 13, **dadurch gekennzeichnet, dass**, wenn das bewegliche Element an dem Kotflügel, für den es vorgesehen ist, befestigt wird, dieses bewegliche Element bereits am anderen beweglichen Element, das für das Strukturteil vorgesehen ist, angebracht ist, so dass anschließend das andere bewegliche Element am Strukturteil befestigt wird, indem der Kotflügel, der mit der Befestigungseinheit versehen ist, am Strukturteil angebracht wird.

## Claims

1. A mount for securing a part to a support and for enabling it to be positioned relative to its surroundings, comprising :
- two pieces (6, 20) that are movable relative to each other parallel to a positioning axis (Y), one piece being for securing to the part and the other to the support;
- retaining means (22a, 26, 28) which prevent the two moving pieces from moving relative to each other and which release them only when the part (2) exerts against the support (4) a force that is greater than a given threshold in a direction parallel to the positioning axis; the mount being **characterized in that** it comprises :
- locking means (31) suitable for being actuated to prevent the two moving pieces from moving relative to each other,
- an energy absorber (56), arranged in the moving piece that is to be secured to the part, in such a manner as to absorb the energy of impacts corresponding to impacts against the part, and
- a fuse zone (56), incorporated in the mount, for separating the part from the support in the event of an impact.

2. A mount according to claim 1, **characterized in that** the retaining means define two thresholds: a first threshold for forces exerted in a first direction; and a second threshold for forces exerted in a second direction, opposite to the first.

3. A mount according to claim 2, **characterized in that** the first and second thresholds are equal.

4. A mount according to claim 2, **characterized in that** the first direction is the direction in which the part (2) moves towards the support (4), and the second direction is the direction in which the part moves away from the support, and **in that** the first threshold is less than the second threshold.

5. A mount according to any one of claims 1 to 4, **characterized in that** the retaining means are constituted by serrations formed in facing bearing surfaces (22a, 26) of the two moving pieces, and by resilient means (28) pressing said bearing surfaces against each other.

6. A mount according to claim 5, **characterized in that** the serrations are symmetrical.

7. A mount according to claim 5, **characterized in that** the serrations are asymmetrical.

8. A mount according to any one of claims 1 to 7, **characterized in that** the locking means (31) act on the retaining means by increasing the threshold above which a force tending to cause the part to slide over the support is capable of releasing the two moving pieces.

9. A mount according to any one of claims 1 to 8, **characterized in that** it is arranged in such a manner that in addition to adjustment in the positioning direction, it allows the part to slide relative to the support in a sliding direction (X) which is preferably substantially perpendicular to the positioning direction (Y).

10. A method of assembling a part on a support by means of a mount according to any one of claims 1 to 9, the method being **characterized in that** it consists in:
- securing one of the moving pieces (20) to the part (2) and the other moving piece (6) to the support (4);
- moving the part (2) along the positioning axis (Y) by exerting a force greater than the threshold on said part; and
- once the part is properly positioned relative to its surroundings, actuating the locking means (31) in such a manner as to prevent the two moving pieces from moving relative to each other.

11. A method according to claim 10, **characterized in that** the moving pieces are secured to the part and to the support by initially fixing the mount assembly to the part, and subsequently securing said part fitted with the mount to the support.

12. A method of assembling a bodywork part to a structural part of a motor vehicle, the vehicle having an opening member covering said structural part and giving access to the mount when it is opened, by means of a mount according to any one of claims 1 to 9, the method being **characterized in that** it consists in:
- securing one of the moving pieces of a mount to the bodywork part;
- opening the opening member to give access to the structural part;
- securing the other moving piece of the mount to the structural part;
- closing the opening member;
- moving the bodywork part along the positioning axis to position it accurately relative to its surrounding;
- opening the opening member to give access to the mount; and
- actuating the locking means to prevent the two moving pieces from moving relative to each other.

13. A method of assembling a motor vehicle front fender to a structural part of said vehicle, the vehicle having an engine compartment hood covering said structural part, the method being **characterized in that** it consists in:
- securing a mount according to any one of claims 1 to 9 to one of the moving pieces;
- opening the hood to give access to the structural part;
- securing the other moving piece of the mount to the structural part, the mount being oriented in such a manner that the positioning axis is substantially perpendicular to the longitudinal direction of the vehicle;
- closing the hood;
- optionally placing spacers between the facing edges of the hood and the fender;
- moving the fender towards the hood so as to position it accurately relative to said hood;
- opening the hood so as to give access to the mount; and
- actuating the locking means to prevent the two moving pieces from moving relative to each other.

14. A method according to claim 13, **characterized in that** while the fender is being secured to the corresponding moving piece, said moving piece is already assembled to the other moving piece for securing to the structural part, such that the other moving piece is subsequently secured to the structural part by fitting the fender carrying the mount assembly to said structural part.
